# EUROPEAN PATENT SPECIFICATION

(11) **EP 4 123 991 B1**
(45) Date of publication and mention of the grant of the patent: **14.10.2026**
(21) Application number: 22176565.4
(22) Date of filing: 31.05.2022
(51) Int. Cl.: H04L 45/02, H04L 45/42, H04L 45/00, H04L 45/48, H04L 45/58, H04L 45/655, H04L 45/74, H04L 45/745, H04L 45/7453, H04L 49/15, H04L 49/25, H04L 49/00, G06F 16/90, G06F 3/06

(54) **METHODS AND APPARATUS FOR COMMUNICATING BETWEEN NODE DEVICES**
VERFAHREN UND GERÄTE ZUR KOMMUNIKATION ZWISCHEN KNOTENVORRICHTUNGEN
PROCÉDÉS ET APPAREIL DE COMMUNICATION ENTRE DES DISPOSITIFS DE N UDS

(30) Priority: 20.07.2021 US 202117380112
(43) Date of publication of application: 25.01.2023
(73) Proprietor: ARM Limited, Cambridgeshire CB1 9NJ (GB)
(72) Inventor: WERKHEISER, Mark David, Austin, 78735 (US); MARRI, Sai Kumar, Austin, 78735 (US); GUCKERT, Lauren Elise, Austin, 78735 (US); RAMAGIRI, Gurunath, Austin, 78735 (US); JALAL, Jamshed, Austin, 78735 (US)
(74) Representative: D Young & Co LLP

(56) References cited:
- EP-A2- 1 569 085
- WO-A1-2019/190827
- US-A1- 2009 274 154
- US-A1- 2020 084 269
- ANONYMOUS: "Double hashing", INTERNET CITATION, 23 April 2015 (2015-04-23), pages 1 - 3, XP002762008, Retrieved from the Internet <URL:https://en.wikipedia.org/w/index.php?title=Double_hashing&oldid=680348753> [retrieved on 20160916]
- SVEN HELMER ET AL: "Indexing Set-Valued Attributes with a Multi-level Extendible Hashing Scheme", 3 September 2007, DATABASE AND EXPERT SYSTEMS APPLICATIONS; [LECTURE NOTES IN COMPUTER SCIENCE], SPRINGER BERLIN HEIDELBERG, BERLIN, HEIDELBERG, PAGE(S) 98 - 108, ISBN: 978-3-540-74467-2, XP019098686

## Description

### BACKGROUND

The present technique relates to the field of interconnects for providing communications between node devices.

Such nodes may be conceptually termed "requester nodes", which issue requests, and "receiver nodes", which receive the requests. For example, a requester node may be a processor or other processing circuitry, which issues a request for data from a storage such as a memory. The storage can thus be considered a receiver node. The "requester" and "receiver" status may be contextual and/or specific to a particular interaction. For example, a node which issued a request to a node (and thus acted as a requester) may subsequently receive a request from a different node (and thus act as a receiver).

A plurality of nodes can be connected via an interconnect, for example with each node separately connected to the interconnect such that all inter-node communications travel via the interconnect. This allows customisability and extensibility of the system, as nodes can be added and removed depending on operating requirements. However, the performance of the interconnect can be a bottleneck to the performance of the whole system.

There is thus a desire for improved interconnects.

US 2009/274154 A1 discloses a hash function being applied to a set of data to generate a hash. A first subset of the hash is used to lookup an entry in a lookup table for a forwarding database. A second subset of the hash is used to identify, within the entry, data comprising an offset.

WO 2019/190827 A1 discloses arbitration among portions of multiple transactions and transmitting a winning portion over one of a multiplicity of virtual channels associated with an interconnect on a clock cycle-by-clock cycle basis.

US 2020/084269 A1 discloses techniques for receiving, with a load balancer, a request from a client device including a session identifier corresponding to a session state associated with the request. The session state is stored on a first node within a cluster of nodes associated with the load balancer. A hash function is applied and based on the result of the hash function, a determination is made as to a selected node within the cluster of nodes to which the request is to be routed.

EP 1 569 085 A2 discloses a method for increasing the storage capacity of a data storage environment. When data is written to the storage environment, a selection may be made as to which storage cluster is to store the data. When data is read from the storage environment, it may be determined which storage cluster stores the data and the data may be retrieved from that storage cluster.

ANONYMOUS: "Double hashing", retrieved from "https://en.wikipedia.org/w/index.php?title=Double_hashing&oldid=680348753" discloses a computer programming technique to resolve hash collisions.

SVEN HELMER ET AL: "Indexing Set-Valued Attributes with a Multi-level Extendible Hashing Scheme", 3 September 2007 (2007-09-03), DATABASE AND EXPERT SYSTEMS APPLICATIONS; [LECTURE NOTES IN COMPUTER SCIENCE], SPRINGER BERLIN HEIDELBERG, BERLIN, HEIDELBERG, PAGE(S) 98 - 108, ISBN: 978-3-540-74467-2, discloses an access method for set-valued attributes that is based on a multi-level extendible hashing scheme which avoids exponential directory growth for skewed data and thus generates a much smaller number of subqueries for query sets (so far fast-growing directories have prohibited hash-based index structures for set-valued retrieval).

### SUMMARY

The present invention is defined in the appended independent claims to which reference should be made. Advantageous features are set out in the appended dependent claims.

At least some examples provide an interconnect apparatus comprising:
a first plurality of interfaces to communicate with respective requester node devices;
a second plurality of interfaces to communicate with respective receiver node devices;
a plurality of home nodes, each home node being configured to:
   receive requests from one or more requester node devices via respective interfaces of the first plurality, each request comprising a target address corresponding to a target receiver node device of said second plurality; and
   transmit each said request to the corresponding target receiver node device via the respective interface of the second plurality, and
mapping circuitry to:
   associate each of said plurality of home nodes with a given home node cluster of one or more home node clusters;
   perform a first hashing of the target address of a given request, received at an interface of the first plurality, to determine a target cluster of said one or more home node clusters;
   perform a second hashing of the target address, to determine a target home node within said target cluster; and
   direct the given message, from said interface of the first plurality, to the target home node.

Further examples provide a system comprising:
a first plurality of requester node devices;
a second plurality of receiver node devices, wherein the requester node devices are configured to transmit requests, each request comprising a target address corresponding to a target receiver node device of said second plurality; and
an interconnect device, communicatively coupled to the first plurality of requester node devices and to the second plurality of receiver node devices, the interconnect device comprising:
   a plurality of home nodes, each home node being configured to:
      receive requests from one or more requester node devices; and
      transmit each said request to the corresponding target receiver node device via the respective interface of the second plurality, and
   mapping circuitry to:
      associate each of said plurality of home nodes with a given home node cluster of one or more home node clusters;
      perform a first hashing of the target address of a given request, to determine a target cluster of said one or more home node clusters;
      perform a second hashing of the target address, to determine a target home node within said target cluster; and
direct the given message to the target home node.

Further examples provide a method comprising:
receiving a request from a home node device, said request being directed to a target receiver node device and comprising a target address associated with the receiver node device;
performing a first hashing of the target address, to determine a target cluster of a plurality of clusters of home nodes;
performing a second hashing of the target address, to determine a target home node within said target cluster;
directing the given message to the target home node; and
transmitting the given message from the target home node to the target receiver node device.

Further aspects, features and advantages of the present technique will be apparent from the following description of examples, which is to be read in conjunction with the accompanying drawings.

### BRIEF DESCRIPTION OF THE DRAWINGS

Figure 1 schematically depicts a system according to an example.
Figure 2 depicts a memory address allocation scheme according to a comparative example.
Figure 3 depicts an example memory address allocation scheme.
Figure 4 depicts a method according to an example.

### DESCRIPTION OF EXAMPLES

As set out above, examples of the present disclosure provide an interconnect apparatus. The apparatus comprises interfaces for communication with nodes: a first plurality of interfaces are configured to communicate with respective requester node devices, and a second plurality of interfaces are configured to communicate with respective receiver node devices. As explained above, the status of a given node as "requester" or "receiver" may be context-specific. One or more of the transmitter nodes may comprise processing circuitry. Alternatively or additionally, one or more of the receiver nodes may comprise a storage, for example a memory node. Requests from the requester nodes to the receiver nodes may thus be requests for data stored in the memory nodes.

The interconnect apparatus comprises a plurality of home nodes. Each home node is configured to receive requests from one or more requester node devices via the respective associated interfaces. Each such request comprises a target address corresponding to a target receiver node device. The home nodes are configured to transmit each received request to the corresponding target receiver node device, via the respective interface. The home nodes thus facilitate communication between requester nodes and receiver nodes. Particular nodes (e.g. particular receiver nodes) may be allocated to particular home nodes, such that each home node handles traffic to its corresponding receiver node(s). Each home node may have an associated cache, or other storage to store temporary copies of data.

In order to allow such an allocation, the interconnect apparatus further comprises mapping circuitry. The mapping circuitry is configured to associate each home node with a given home node cluster. There may be one or more home node clusters in a particular implementation of the present example.

The mapping circuitry is configured to perform a first hashing of the target address of a given request, to determine an appropriate target cluster of said one or more home node clusters. This hashing may be skipped (saving computational operations) if the number of clusters is equal to 1. The mapping circuitry further performs a second hashing of the target address, to determine a target home node within said target cluster. For example, the mapping circuitry may be configured to associate each of said receiver node devices with a given home node cluster of said one or more home node clusters; said target cluster is the cluster associated with the target receiver node device of the given request.

The given request is then directed, by the mapping circuitry, from the interface (of the first plurality) at which it is received, to the target home node.

This two-level hashing provides an efficient way of configuring an interconnect to handle data traffic. In particular, it allows a relatively even distribution of receiver nodes across the home nodes, for example by having a power-of-two number of home node clusters (where the integer can be 1). This allows the number of home nodes to be arbitrary, as well as being scalable and configurable. This improves the flexibility of the system (whilst maintaining performance), especially versus comparative examples in which the number of home nodes must be a power of 2 to ensure even distribution. The present system thus combines the advantages of comparative systems in which all nodes are mapped to all home nodes (flexible, but inefficient) with the advantages of comparative systems in which the number of home nodes is forced to be a power of 2 (computationally efficient, but inflexible), whilst also being more scalable than either of these comparative systems.

In examples, an equal number of home nodes is associated with each cluster. This allows maximally even distribution of receiver node addresses across the home nodes, in particular in combination with an integer-power-of-2 number of home nodes.

The number of clusters may be selected based on the number of receiver nodes at a given time. This allows the number of clusters to be selected (at system configuration, or on the fly as nodes are added or removed) in order to maximise performance. For example, the number of clusters may be selected to localize network traffic to the receiver node devices. As another example, the number of clusters may be determined based on the number of receiver nodes. For example, the number of clusters may be equal to the number of receiver nodes (such that each receiver node is assigned its own cluster). More generally, the number of clusters may be an integer multiple of the number of receiver nodes such that the addresses of a given receiver node are split across multiple clusters, or a fraction of the number of receiver nodes, such that multiple receiver nodes share a single cluster. These provide various ways of configuring the clusters, such that performance can be optimised in a particular system.

In an example, the mapping circuitry is configured to perform the first hashing as a log2(C)-bit hash of the target address, where C is the number of clusters of said one or more home node clusters. As explained in more detail below, the address distribution across the clusters can be configured to allow such a hashing to extract the appropriate cluster identity, providing a computationally efficient way of determining the correct cluster.

Alternatively or additionally, the mapping circuitry may be configured to, prior to performing the second hashing, correct the target address for bias associated with the first hashing. In some examples, if this is not done, holes may be introduced in caches of the home nodes and/or in memory (e.g. when each receiver node is a memory, such as a Dynamic Random Access Memory DRAM). Such bias correction thus maximises efficiency and corresponding computational performance.

This bias correction may comprise removing one or more bits from the target address. For example, log2(C) bits may be removed, where C is the number of clusters of said one or more home node clusters. Bits may be selected for removal based on at least one of the number of clusters, and a storage element size (for example a cache line size) associated with the apparatus. As an example, said removing may comprise selecting a least significant bit based on the storage element size, selecting a most significant bit based on the number of clusters, and removing the bits from the most significant bit to the least significant bit (inclusive). This could be expressed as [MSB:LSB] = [log2(cache line size) + log2(number of clusters) - 1: log2(cache line size)]. This provides an effective way of correcting the bias which may arise from the above-described first hashing.

Examples of the present disclosure will now be described with reference to the drawings.

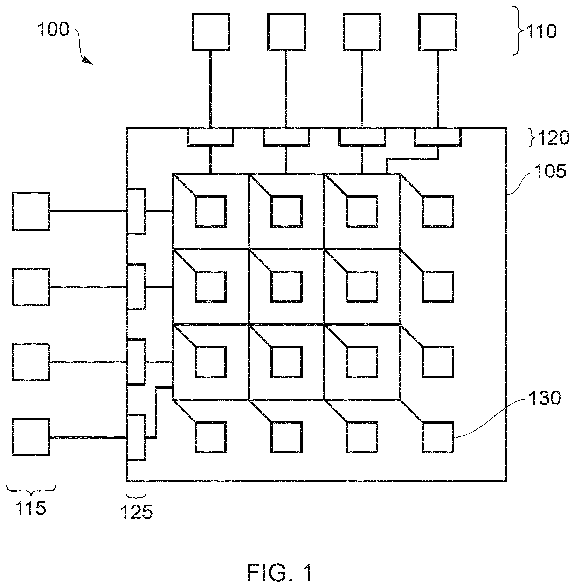

Figure 1 schematically shows a system 100 according to an example. The system 100 comprises an interconnect 105, requester node devices 110, and receiver node devices 115. The requester nodes 110 may for example be processing devices such as processors or processor cores, and the receiver nodes 115 may be storage nodes such as memory devices, for example dynamic random access memory (DRAM) devices.

The requester nodes 110 are connected to the interconnect 105 via interfaces 120. Similarly, the receiver nodes 115 are connected to the interconnect 105 via interfaces 125. Thus, the requester nodes 110 are indirectly connected to the receiver nodes 115, via the interconnect 105.

The requester nodes issue requests, each of which is to be services by a given receiver node. For example, if the receiver nodes 115 are storage nodes, an overall memory address space may be distributed across the receiver nodes 115. A given request may then identify such an address, such that it should be forwarded to the appropriate receiver node 115. Alternatively or additionally, a request may specifically identify the receiver node by which it is to be serviced.

The interconnect 105 comprises a number of home nodes 130. The home nodes are communicatively coupled to the interfaces 120, 125 via a mesh of connections, and are configured to receive requests from interfaces 120 and distribute each request to the interface 125 of the appropriate receiver node 115. In some systems, each home node 130 can direct requests to any of the receiver nodes 115. However, in examples of the present disclosure, particular receiver nodes 115 can be associated with particular home nodes, or clusters of home nodes, such that each home node 130 specifically processes requests for receiver nodes 115 with which it is associated. This can advantageously improve system performance, as described in more detail below.

Each home node may comprise a temporary storage such as a cache, such that frequently-requested data can be served directly from the home node.

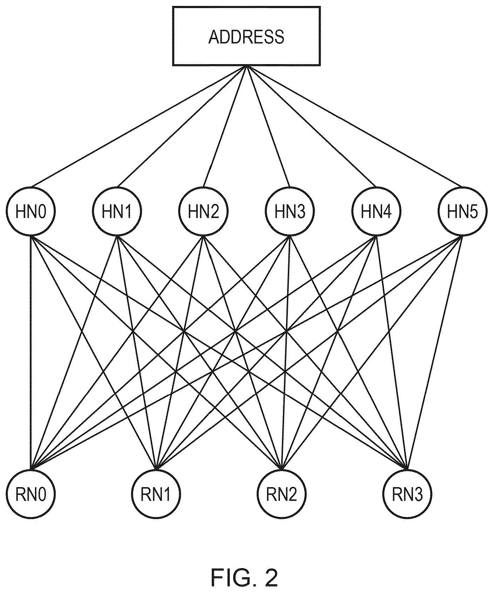

Figure 2 depicts an allocation of memory addresses within a comparative example which does not implement aspects of the present disclosure. In this example, requester and receiver nodes are connected via an interconnect in the manner of Figure 1. The interconnect, in this comparative example, comprises 6 home nodes HN0-HN5 and 4 receiver nodes RN0-RN3. Addresses are distributed across the receiver nodes, such that each receiver node stores data having addresses within a specified range.

In this example, any request can be handled by any home node. Thus, each home node must be configured to handle a request relating to any address, and so each of the 6 home nodes is configured to direct requests to each of the 4 receiver nodes. This configuration can lead to high congestion of traffic within the interconnect, in particular when a relatively high number of requests is to be processed. It is also poorly scalable: the congestion becomes significantly worse when additional receiver nodes (or additional requester nodes) are added.

This congestion may be alleviated by way of a hashing scheme to distribute memory addresses between the home nodes, such that each home node can handle a subset of the addresses. One way in which this could be done is to use a log2(n)-bits hash on the address to determine a home node, where n is the number of home nodes. However, this only leads to an even distribution of addresses if the number of home nodes is a power of 2. In other systems, such as that of Figure 2 (with 6 home nodes), a hashing scheme such as this can lead to uneven distribution of addresses, or lead to holes in the memory space (or in the caches of the home nodes, in systems in which these are implemented), significantly reducing efficiency.

By way of example, a 3-bit address hash for calculating a target home node in such a comparative example, where the address is A, could be: $target \left[2:0\right] = A {\left[47:45\right]}^{∧} A {\left[44:42\right]}^{∧} {…}^{∧} A {\left[11:9\right]}^{∧} A \left[8:6\right]$

This implicitly assumes the existence of home node targets 6 and 7. If, for example, these were mapped to home nodes HN0 and HN1 in Figure 2 (to ensure that each address can be handled), the address space would be distributed across home nodes HN0-HN5 as follows:

| Home node | % of addresses |
|---|---|
| HN0 | 25% |
| HN1 | 25% |
| HN2 | 12.5% |
| HN3 | 12.5% |
| HN4 | 12.5% |
| HN5 | 12.5% |

This uneven distribution leads to inefficient memory access, and inefficient usage of home node caches, thereby decreasing the rate at which the interconnect can service requests.

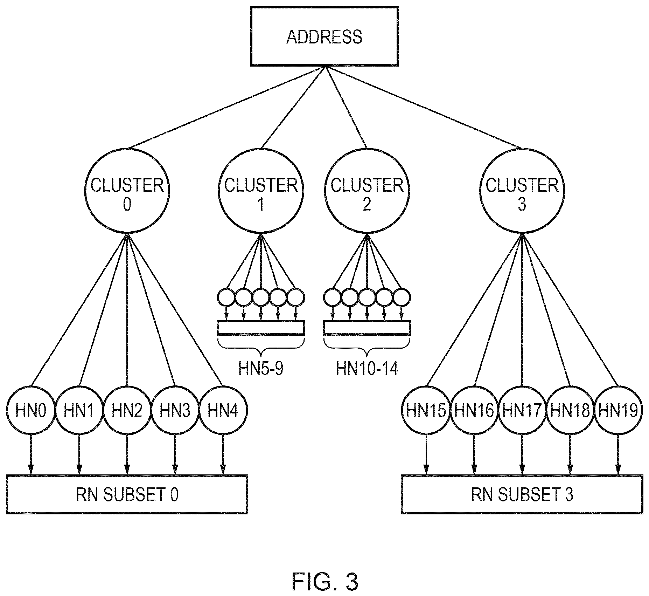

Figure 3 schematically depicts an allocation of memory addresses according to an example of the present disclosure, which improves upon the aforementioned issues.

In this example, requester and receiver nodes are connected via an interconnect as described above with reference to Figure 1. The interconnect, in this example, comprises 20 home nodes HN0-HN19, and a number of receiver nodes RN.

Addresses are allocated to home nodes according to a two-level hierarchical hashing scheme, in which the first level hashing of an address identifies a particular cluster of home nodes, and the second level identifies a particular home node within that cluster.

In this example, 4 clusters of home nodes (cluster 0 - cluster 3) each contain 5 home nodes. In particular cluster 0 contains home nodes HN0-HN4, clusters 1 and 2 are not shown in detail (in the interests of not over-complicating the diagram), and cluster 3 contains home nodes HN15-HN19. Each cluster of home nodes can be allocated to a (exclusive) subset of receiver nodes. This is shown in Figure 3, where the nodes of clusters 0, 1, 2 and 3, respectively, are allocated to receiver node subsets 0, 1, 2 and 3. Thus, each home node can be configured to direct requests only to receiver nodes in the appropriate subset, thereby significantly decreasing complexity (as compared against Figure 2), and correspondingly reducing complexity in the interconnect. Alternatively, each receiver node may be allocated to a specific home node, such that each home node can be configured to direct requests only to its specific home node(s).

The address allocation is particularly advantageous if the number of clusters is a power of 2 (including 1, i.e. 2⁰), and each cluster contains the same number of home nodes. This means that the aforementioned advantages of a power-of-two-home-nodes system (i.e. near-even distribution of addresses, reduced congestion in the interconnect, and full usage of home node caches) can be achieved, even in a system with a non-power-of-two number of home nodes. This significantly improves the flexibility and scalability of the system.

In an example, the first-level hash (to identify the cluster to which a given request should be directed) is a log2(C) bit hash, where C is the number of clusters. If the number of clusters is 1, this step can be skipped.

This has may be as follows, for address A: $Cluster \left[1:0\right] = A {\left[47:46\right]}^{∧} A {\left[45:44\right]}^{∧} A {\left[43:42\right]}^{∧} {…}^{∧} A {\left[9:8\right]}^{∧} A \left[7:6\right]$

This therefore achieves the mathematical advantages of the above-described hash, regardless of whether the number of home nodes is a power of 2.

In this example, prior to performing the second-level hash (to identify a particular home node within the identified cluster), the address may be modified to remove bits A[6+log2(C)-1 : 6], to remove bias of the first level hash. In an example system, this has the effect of removing from the address the bottom log2(C) bits above the relevant cache line. Performing this removal can prevent holes from being introduced in the memory or home node caches.

The second-level hash can then be performed as a mod function on the modified address using a has with a sufficiently large number of bits.

In an example in which 2 million addresses are provided within the home node clustering scheme of Figure 3, the distribution of memory addresses is shown in the following table. This is compared against the distribution of memory addresses if a simple power-of-two hash, such as that described above, were applied.

| Home node | % of addresses (Fig. 3 hierarchical hash) | % of accesses (power-of-two hash) |
|---|---|---|
| HN0 | 5.00485% | 6.25% |
| HN1 | 5.0049% | 6.25% |
| HN2 | 5.0049% | 6.25% |
| HN3 | 5.0049% | 6.25% |
| HN4 | 4.980% | 6.25% |
| HN5 | 5.00485% | 6.25% |
| HN6 | 5.0049% | 6.25% |
| HN7 | 5.0049% | 6.25% |
| HN8 | 5.0049% | 6.25% |
| HN9 | 4.980% | 6.25% |
| HN10 | 5.00485% | 6.25% |
| HN11 | 5.0049% | 6.25% |
| HN12 | 5.0049% | 3.125% |
| HN13 | 5.0049% | 3.125% |
| HN14 | 4.980% | 3.125% |
| HN15 | 5.00485% | 3.125% |
| HN16 | 5.0049% | 3.125% |
| HN17 | 5.0049% | 3.125% |
| HN18 | 5.0049% | 3.125% |
| HN19 | 4.980% | 3.125% |

It can be seen that the presently-described hierarchical hashing scheme provides significantly more even distribution of addresses, with a commensurate reduction of congestion in the interconnect and increased efficiency of operation.

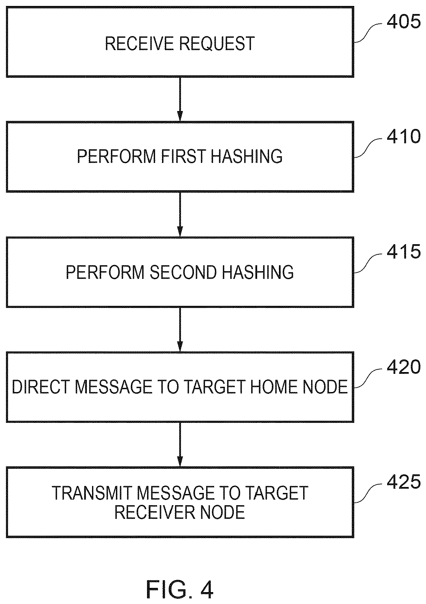

Figure 4 schematically depicts a method 400 according to an example of the present disclosure. The method may for example be implemented within the interconnect 105 of Figure 1.

At block 405, a request is received from a home node device. The request is directed to a target receiver node device, and comprises a target address associated with the receiver node device.

At block 410, a first hashing of the target address is performed, to determine a target cluster of home nodes. The target cluster is one of a plurality of clusters of home nodes.

At block 415, a second hashing of the target address is performed, to determine a target home node within the target cluster.

At block 420, the message is directed to the target home node.

At block 425, the message is transmitted from the target home node to the target receiver node device.

Apparatuses and methods are thus provided for clustering home nodes of an interconnect, in order to allow a near-even distribution of addresses across the home nodes by way of a two-level hierarchical hashing scheme. From the above description it will be seen that the techniques described herein provides a number of significant benefits. In particular, the advantages can be achieved in systems with a non-power-of-two number of home nodes as well as a power-of-two number of home nodes (and, similarly, with a non-power-of-two number of receiver nodes as well as a power-of-two number), and the described systems are scalable to arbitrarily large numbers of requester nodes, home nodes and receiver nodes.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

## Claims

1. An interconnect apparatus (105) comprising:
a first plurality of interfaces (120) to communicate with respective requester node devices (110);
a second plurality of interfaces (125) to communicate with respective receiver node devices (115);
a plurality of home nodes (130), each home node being configured to:
receive requests from one or more requester node devices via respective interfaces of the first plurality, each request comprising a target address corresponding to a target receiver node device of said second plurality; and
transmit each said request to the corresponding target receiver node device via the respective interface of the second plurality, and
mapping circuitry configured to:
associate each of said plurality of home nodes with a given home node cluster of one or more home node clusters;
perform a first hashing of the target address of a given request, received at an interface of the first plurality, to determine a target cluster of said one or more home node clusters;
perform a second hashing of the target address, to determine a target home node within said target cluster; and
direct the given request, from said interface of the first plurality, to the target home node.

2. An apparatus according to claim 1, wherein:
the mapping circuitry is further configured to associate each of said receiver node devices with a given home node cluster of said one or more home node clusters; and
said target cluster is the cluster associated with the target receiver node device of the given request.

3. An apparatus according to claim 1 or claim 2, wherein the number of clusters of said one or more home node clusters is an integer power of 2.

4. An apparatus according to any preceding claim, wherein the mapping circuitry is configured to associate an equal number of home nodes with each cluster.

5. An apparatus according to any preceding claim, wherein the number of clusters, of said one or more home node clusters, is based on the number of receiver nodes of said second plurality.

6. An apparatus according to claim 5, wherein the mapping circuitry is configured to determine the number of clusters to localize network traffic to the receiver node devices.

7. An apparatus according to any preceding claim, wherein the mapping circuitry is configured to skip the first hashing responsive to the number of clusters, of said one or more home node clusters, being equal to one.

8. An apparatus according to any preceding claim, wherein the mapping circuitry is configured to perform the first hashing as a log2(C)-bit hash of the target address, where C is the number of clusters of said one or more home node clusters.

9. An apparatus according to any preceding claim, wherein the mapping circuitry is configured to, prior to performing the second hashing, correct the target address for bias associated with the first hashing.

10. An apparatus according to claim 9, wherein said correcting comprises removing at least one bit from the target address.

11. An apparatus according to claim 10, wherein said removing comprises removing log2(C) bits, where C is the number of clusters of said one or more home node clusters.

12. An apparatus according to claim 10 or claim 11, wherein said removing comprises selecting bits for removal based on at least one of:
the number of clusters of said one or more home node clusters; and
a storage element size associated with the apparatus.

13. An apparatus according to claim 12, wherein said removing comprises:
selecting a least significant bit based on the storage element size;
selecting a most significant bit based on the number of clusters of said one or more home node clusters; and
removing bits comprising the most significant bit, the least significant bit, and each bit between the most significant bit and the least significant bit.

14. A system (100) comprising:
a first plurality of requester node devices (110);
a second plurality of receiver node devices (115), wherein the requester node devices are configured to transmit requests, each request comprising a target address corresponding to a target receiver node device of said second plurality; and
an interconnect device (105), communicatively coupled to the first plurality of requester node devices and to the second plurality of receiver node devices, the interconnect device comprising:
a plurality of home nodes (130), each home node being configured to:
receive requests from one or more requester node devices; and
transmit each said request to the corresponding target receiver node device via the respective interface of the second plurality, and
mapping circuitry to:
associate each of said plurality of home nodes with a given home node cluster of one or more home node clusters;
perform a first hashing of the target address of a given request, to determine a target cluster of said one or more home node clusters;
perform a second hashing of the target address, to determine a target home node within said target cluster; and
direct the given request to the target home node.

15. A method implemented by an interconnect apparatus (105), the method comprising:
receiving (405), by each of a plurality of home nodes (130) of the interconnect apparatus, requests from one or more requester node devices (110) via respective interfaces of a first plurality of interfaces of the interconnect apparatus, each request comprising a target address corresponding to a target receiver node device;
transmitting, by each of the plurality of home nodes, each said request to the corresponding target receiver node device via a respective interface of a second plurality of interfaces of the interconnect apparatus;
associating, by mapping circuitry of the interconnect apparatus, each of said plurality of home nodes with a given home node cluster of one or more home node clusters;
performing (410), by the mapping circuitry of the interconnect apparatus, a first hashing of the target address of a given request, to determine a target cluster of said one or more home node clusters;
performing (415), by the mapping circuitry of the interconnect apparatus, a second hashing of the target address, to determine a target home node within said target cluster; and
directing (420), by the mapping circuitry of the interconnect apparatus, from said interface of the first plurality, the given request to the target home node.

## Patentansprüche

1. Verbindungsvorrichtung (105), die Folgendes umfasst:
eine erste Vielzahl von Schnittstellen (120) zum Kommunizieren mit jeweiligen Anfordererknoteneinrichtungen (110);
eine zweite Vielzahl von Schnittstellen (125) zum Kommunizieren mit jeweiligen Empfängerknoteneinrichtungen (115);
eine Vielzahl von Heimatknoten (130), wobei jeder Heimatknoten für Folgendes konfiguriert ist:
Empfangen von Anforderungen von einer oder mehreren Anfordererknoteneinrichtungen über jeweilige Schnittstellen der ersten Vielzahl, wobei jede Anforderung eine Zieladresse umfasst, die einer Zielempfängerknoteneinrichtung der zweiten Vielzahl entspricht; und
Übertragen jeder der Anforderungen an die entsprechende Zielempfängerknoteneinrichtung über die jeweilige Schnittstelle der zweiten Vielzahl, und
eine Zuordnungsschaltungsanordnung, die für Folgendes konfiguriert ist:
Assoziieren jedes der Vielzahl von Heimatknoten mit einem gegebenen Heimatknotencluster eines oder mehrerer Heimatknotencluster;
Durchführen eines ersten Hashings der Zieladresse einer gegebenen Anforderung, die an einer Schnittstelle der ersten Vielzahl empfangen wird, um einen Zielcluster des einen oder der mehreren Heimatknotencluster zu bestimmen;
Durchführen eines zweiten Hashings der Zieladresse, um einen Zielheimatknoten innerhalb des Zielclusters zu bestimmen; und
Weiterleiten der gegebenen Anforderung von der Schnittstelle der ersten Vielzahl an den Zielheimatknoten.

2. Vorrichtung nach Anspruch 1, wobei:
die Zuordnungsschaltungsanordnung ferner konfiguriert ist, um jede der Empfängerknoteneinrichtungen mit einem gegebenen Heimatknotencluster des einen oder der mehreren Heimatknotencluster zu assoziieren; und
der Zielcluster der Cluster ist, der mit der Zielempfängerknoteneinrichtung der gegebenen Anforderung assoziiert ist.

3. Vorrichtung nach Anspruch 1 oder Anspruch 2, wobei die Anzahl von Clustern des einen oder der mehreren Heimatknotencluster eine ganzzahlige Potenz von 2 ist.

4. Vorrichtung nach einem der vorhergehenden Ansprüche, wobei die Zuordnungsschaltungsanordnung konfiguriert ist, um eine gleiche Anzahl von Heimatknoten mit jedem Cluster zu assoziieren.

5. Vorrichtung nach einem der vorhergehenden Ansprüche, wobei die Anzahl von Clustern des einen oder der mehreren Heimatknotencluster auf der Anzahl von Empfängerknoten der zweiten Vielzahl basiert.

6. Vorrichtung nach Anspruch 5, wobei die Zuordnungsschaltungsanordnung konfiguriert ist, um die Anzahl von Clustern zu bestimmen, um Netzwerkverkehr zu den Empfängerknoteneinrichtungen zu lokalisieren.

7. Vorrichtung nach einem der vorhergehenden Ansprüche, wobei die Zuordnungsschaltungsanordnung konfiguriert ist, um das erste Hashing als Reaktion darauf zu überspringen, dass die Anzahl von Clustern des einen oder der mehreren Heimatknotencluster gleich eins ist.

8. Vorrichtung nach einem der vorhergehenden Ansprüche, wobei die Zuordnungsschaltungsanordnung konfiguriert ist, um das erste Hashing als einen log2(C)-Bit-Hash der Zieladresse durchzuführen, wobei C die Anzahl von Clustern des einen oder der mehreren Heimatknotencluster ist.

9. Vorrichtung nach einem der vorhergehenden Ansprüche, wobei die Zuordnungsschaltungsanordnung konfiguriert ist, um vor dem Durchführen des zweiten Hashings die Zieladresse hinsichtlich eines mit dem ersten Hashing assoziierten Bias zu korrigieren.

10. Vorrichtung nach Anspruch 9, wobei das Korrigieren das Entfernen mindestens eines Bits aus der Zieladresse umfasst.

11. Vorrichtung nach Anspruch 10, wobei das Entfernen das Entfernen von log2(C)-Bits umfasst, wobei C die Anzahl von Clustern des einen oder der mehreren Heimatknotencluster ist.

12. Vorrichtung nach Anspruch 10 oder Anspruch 11, wobei das Entfernen das Auswählen von Bits zur Entfernung basierend auf mindestens einem von Folgendem umfasst:
der Anzahl von Clustern des einen oder der mehreren Heimatknotencluster; und
einer mit der Vorrichtung assoziierten Speicherelementgröße.

13. Vorrichtung nach Anspruch 12, wobei das Entfernen Folgendes umfasst:
Auswählen eines niedrigstwertigen Bits basierend auf der Speicherelementgröße;
Auswählen eines höchstwertigen Bits basierend auf der Anzahl von Clustern des einen oder der mehreren Heimatknotencluster; und
Entfernen von Bits, die das höchstwertige Bit, das niedrigstwertige Bit und jedes Bit zwischen dem höchstwertigen Bit und dem niedrigstwertigen Bit umfassen.

14. System (100), das Folgendes umfasst:
eine erste Vielzahl von Anfordererknoteneinrichtungen (110);
eine zweite Vielzahl von Empfängerknoteneinrichtungen (115), wobei die Anfordererknoteneinrichtungen dazu konfiguriert sind, Anforderungen zu übertragen, wobei jede Anforderung eine Zieladresse umfasst, die einer Zielempfängerknoteneinrichtung der zweiten Vielzahl entspricht; und
eine Verbindungseinrichtung (105), die kommunikativ mit der ersten Vielzahl von Anfordererknoteneinrichtungen und mit der zweiten Vielzahl von Empfängerknoteneinrichtungen gekoppelt ist, wobei die Verbindungseinrichtung Folgendes umfasst:
eine Vielzahl von Heimatknoten (130), wobei jeder Heimatknoten für Folgendes konfiguriert ist:
Empfangen von Anforderungen von einer oder mehreren Anfordererknoteneinrichtungen; und
Übertragen jeder der Anforderungen an die entsprechende Zielempfängerknoteneinrichtung über die jeweilige Schnittstelle der zweiten Vielzahl, und
eine Zuordnungsschaltungsanordnung für Folgendes:
Assoziieren jedes der Vielzahl von Heimatknoten mit einem gegebenen Heimatknotencluster eines oder mehrerer Heimatknotencluster;
Durchführen eines ersten Hashings der Zieladresse einer gegebenen Anforderung, um einen Zielcluster des einen oder der mehreren Heimatknotencluster zu bestimmen;
Durchführen eines zweiten Hashings der Zieladresse, um einen Zielheimatknoten innerhalb des Zielclusters zu bestimmen; und
Weiterleiten der gegebenen Anforderung an den Zielheimatknoten.

15. Verfahren, das durch eine Verbindungsvorrichtung (105) implementiert wird, wobei das Verfahren Folgendes umfasst:
Empfangen (405), durch jeden einer Vielzahl von Heimatknoten (130) der Verbindungsvorrichtung, von Anforderungen von einer oder mehreren Anfordererknoteneinrichtungen (110) über jeweilige Schnittstellen einer ersten Vielzahl von Schnittstellen der Verbindungsvorrichtung, wobei jede Anforderung eine Zieladresse umfasst, die einer Zielempfängerknoteneinrichtung entspricht;
Übertragen, durch jeden der Vielzahl von Heimatknoten, jeder der Anforderungen an die entsprechende Zielempfängerknoteneinrichtung über eine jeweilige Schnittstelle einer zweiten Vielzahl von Schnittstellen der Verbindungsvorrichtung;
Assoziieren, durch eine Zuordnungsschaltungsanordnung der Verbindungsvorrichtung, jedes der Vielzahl von Heimatknoten mit einem gegebenen Heimatknotencluster eines oder mehrerer Heimatknotencluster;
Durchführen (410), durch die Zuordnungsschaltungsanordnung der Verbindungsvorrichtung, eines ersten Hashings der Zieladresse einer gegebenen Anforderung, um einen Zielcluster des einen oder der mehreren Heimatknotencluster zu bestimmen;
Durchführen (415), durch die Zuordnungsschaltungsanordnung der Verbindungsvorrichtung, eines zweiten Hashings der Zieladresse, um einen Zielheimatknoten innerhalb des Zielclusters zu bestimmen; und
Weiterleiten (420), durch die Zuordnungsschaltungsanordnung der Verbindungsvorrichtung, der gegebenen Anforderung von der Schnittstelle der ersten Vielzahl an den Zielheimatknoten.

## Revendications

1. Appareil d'interconnexion (105), comprenant :
une première pluralité d'interfaces (120) pour communiquer avec des dispositifs nœuds demandeurs respectifs (110) ;
une seconde pluralité d'interfaces (125) pour communiquer avec dispositifs nœuds récepteurs respectifs (115) ;
une pluralité de nœuds domestiques (130), chaque nœud domestique étant configuré pour :
recevoir des demandes en provenance d'un ou de plusieurs dispositifs nœuds demandeurs par l'intermédiaire d'interfaces respectives de la première pluralité, chaque demande comprenant une adresse cible correspondant à un dispositif nœud récepteur cible de ladite seconde pluralité ; et
transmettre chaque dite demande au dispositif nœud récepteur cible correspondant par l'intermédiaire de l'interface respective de la seconde pluralité, et une circuiterie de mappage configurée pour :
associer chacun de ladite pluralité de nœuds domestiques à une grappe donnée de nœuds domestiques d'une ou de plusieurs grappes de nœuds domestiques ;
réaliser un premier hachage de l'adresse cible d'une demande donnée, reçue à une interface de la première pluralité, pour déterminer une grappe cible de ladite une ou desdites plusieurs grappes de nœuds domestiques ;
réaliser un second hachage de l'adresse cible, pour déterminer un nœud domestique cible à l'intérieur de ladite grappe cible ; et
diriger la demande donnée, depuis ladite interface de la première pluralité, jusqu'au nœud domestique cible.

2. Appareil selon la revendication 1, dans lequel :
la circuiterie de mappage est en outre configurée pour associer chacun desdits dispositifs nœuds récepteurs à une grappe donnée de nœuds domestiques de ladite une ou desdites plusieurs grappes de nœuds domestiques ; et
ladite grappe cible est la grappe associée au dispositif nœud récepteur cible de la demande donnée.

3. Appareil selon la revendication 1 ou la revendication 2, dans lequel le nombre de grappes de ladite une ou desdites plusieurs grappes de nœuds domestiques est une puissance entière de 2.

4. Appareil selon une quelconque revendication précédente, dans lequel la circuiterie de mappage est configurée pour associer un nombre égal de nœuds domestiques à chaque grappe.

5. Appareil selon une quelconque revendication précédente, dans lequel le nombre de grappes, de ladite une ou desdites plusieurs grappes de nœuds domestiques, est basé sur le nombre de nœuds récepteurs de ladite seconde pluralité.

6. Appareil selon la revendication 5, dans lequel la circuiterie de mappage est configurée pour déterminer le nombre de grappes pour localiser un trafic de réseau vers les dispositifs nœuds récepteurs.

7. Appareil selon une quelconque revendication précédente, dans lequel la circuiterie de mappage est configurée pour ne pas réaliser le premier hachage en réponse au cas où le nombre de grappes, de ladite une ou desdites plusieurs grappes de nœuds domestiques, serait égal à un.

8. Appareil selon une quelconque revendication précédente, dans lequel la circuiterie de mappage est configurée pour réaliser le premier hachage sous la forme de hachage log2(C) bits de l'adresse cible, où C est le nombre de grappes de ladite une ou desdites plusieurs grappes de nœuds domestiques.

9. Appareil selon une quelconque revendication précédente, dans lequel la circuiterie de mappage est configurée pour, avant de réaliser le second hachage, corriger l'adresse cible en cas de biais associé au premier hachage.

10. Appareil selon la revendication 9, dans lequel ledit fait de corriger comprend le fait d'éliminer au moins un bit de l'adresse cible.

11. Appareil selon la revendication 10, dans lequel ledit fait d'éliminer comprend le fait d'éliminer log2(C) bits, où C est le nombre de grappes de ladite une ou desdites plusieurs grappes de nœuds domestiques.

12. Appareil selon la revendication 10 ou la revendication 11, dans lequel ledit fait d'éliminer comprend le fait de sélectionner des bits pour l'élimination sur la base d'au moins un paramètre parmi :
le nombre de grappes de ladite une ou desdites plusieurs grappes de nœuds domestiques ; et
une taille d'élément de stockage associée à l'appareil.

13. Appareil selon la revendication 12, dans lequel ledit fait d'éliminer comprend les faits suivants :
sélectionner un bit le moins significatif sur la base de la taille d'élément de stockage ;
sélectionner un bit le plus significatif sur la base du nombre de grappes de ladite une ou desdites plusieurs grappes de nœuds domestiques ; et
éliminer des bits comprenant le bit le plus significatif, le bit le moins significatif, et chaque bit entre le bit le plus significatif et le bit le moins significatif.

14. Système (100), comprenant :
une première pluralité de dispositifs nœuds demandeurs (110) ;
une seconde pluralité de dispositifs nœuds récepteurs (115), dans lequel les dispositifs nœuds demandeurs sont configurés pour transmettre des demandes, chaque demande comprenant une adresse cible correspondant à un dispositif nœud récepteur cible de ladite seconde pluralité ; et
un dispositif d'interconnexion (105), couplé en communication à la première pluralité de dispositifs nœuds demandeurs et à la seconde pluralité de dispositifs nœuds récepteurs, le dispositif d'interconnexion comprenant :
une pluralité de nœuds domestiques (130), chaque nœud domestique étant configuré pour :
recevoir des demandes en provenance d'un ou de plusieurs dispositifs nœuds demandeurs ; et
transmettre chaque dite demande au dispositif nœud récepteur cible correspondant par l'intermédiaire de l'interface respective de la seconde pluralité, et une circuiterie de mappage pour :
associer chacun de ladite pluralité de nœuds domestiques à une grappe donnée de nœuds domestiques d'une ou de plusieurs grappes de nœuds domestiques ;
réaliser un premier hachage de l'adresse cible d'une demande donnée, pour déterminer une grappe cible de ladite une ou desdites plusieurs grappes de nœuds domestiques ;
réaliser un second hachage de l'adresse cible, pour déterminer un nœud domestique cible à l'intérieur de ladite grappe cible ; et
diriger la demande donnée jusqu'au nœud domestique cible.

15. Procédé mis en œuvre par an appareil d'interconnexion (105), le procédé comprenant les faits suivants :
recevoir (405), par chacun d'une pluralité de nœuds domestiques (130) de l'appareil d'interconnexion, des demandes en provenance d'un ou de plusieurs dispositifs nœuds demandeurs (110) par l'intermédiaire d'interfaces respectives d'une première pluralité d'interfaces de l'appareil d'interconnexion, chaque demande comprenant une adresse cible correspondant à un dispositif nœud récepteur cible ;
transmettre, par chacun de la pluralité de nœuds domestiques, chaque dite demande au dispositif nœud récepteur cible correspondant par l'intermédiaire d'une interface respective d'une seconde pluralité d'interfaces de l'appareil d'interconnexion ;
associer, par une circuiterie de mappage de l'appareil d'interconnexion, chacun de ladite pluralité de nœuds domestiques à une grappe donnée de nœuds domestiques d'une ou de plusieurs grappes de nœuds domestiques ;
réaliser (410), par la circuiterie de mappage de l'appareil d'interconnexion, un premier hachage de l'adresse cible d'une demande donnée, pour déterminer une grappe cible de ladite une ou desdites plusieurs grappes de nœuds domestiques ;
réaliser (415), par la circuiterie de mappage de l'appareil d'interconnexion, un second hachage de l'adresse cible, pour déterminer un nœud domestique cible à l'intérieur de ladite grappe cible ; et
diriger (420), par la circuiterie de mappage de l'appareil d'interconnexion, depuis ladite interface de la première pluralité, la demande donnée jusqu'au nœud domestique cible.
